# EUROPEAN PATENT APPLICATION

(11) **EP 2 136 374 A1**
(43) Date of publication of application: **23.12.2009**
(21) Application number: 09162844.6
(22) Date of filing: 16.06.2009
(51) Int. Cl.: G21C 17/017, F16L 55/34

(54) **Apparatus and method for remotely inspecting and/or treating the inside surface of pipes or elongated vessels, especially in nuclear reactor coolant systems**

(30) Priority: 17.06.2008 US 213269
(71) Applicant: GE-Hitachi Nuclear Energy Americas LLC, Wilmington, NC 28401 (US)
(72) Inventor: Offer, Henry, Los Gatos, CA 95033 (US); Pao, Hsueh-Wen, Saratoga, CA 95070 (US); Jones, William Dale, Phoenix, AZ 85007 (US)
(74) Representative: Gray, Thomas

(57) **Abstract**

A tool (10) for remotely inspecting and/or treating the inside surface of a pipe (60) is disclosed. The tool (10) is placed at the entrance to the pipe (60) and walks into the pipe (60) to the desired location. Upon reaching the desired location, the tool (10) anchors itself, then advances an end effector, e.g. a brush (52) axially and/or radially until it touches the inside surface of the pipe (60). The tool (10) activates the end effector in order for the inspection and/or treatment process to be carried out.
Application for inspecting and/or treating (e.g. brushing) a weld for mitigating corrosion.

## Description

The present invention relates to nuclear power plants, and, more particularly, to a tool for mitigating stress corrosion cracking in reactor coolant system welds, piping and/or other components in pressurized water reactor plants.

### BACKGROUND OF THE INVENTION

Primary water stress corrosion cracking ("PWSCC") in SCC-susceptible metal welds, such as nickel-based welds (e.g., Alloy 600-type welds), in the piping and/or other components of reactor coolant systems ("RCS") of pressurized water reactor ("PWR") plants, or directly in the RCS piping and/or other components, is a significant challenge facing the nuclear power industry. Frequent occurrences of stress corrosion cracking have cost the nuclear industry significant amounts of money because of forced and extended outages, increased inspection requirements, repairs and replacements, and increased plant inspections by industry regulators. Managing degradation of RCS piping and other components in a PWR nuclear power plant is critical to the plant's continued safe operation and high reliability. The inspection and evaluation of susceptible areas of reactor coolant system piping and other components for the purpose of applying PWSCC mitigation strategies, especially in areas where inspections are difficult and repair and/or replacement options are prohibitively expensive, is desirable because the mitigation of PWSCC in nickel-based welds or other SCC-susceptible base or weld metals in RCS piping and/or other components may delay the repair and/or replacement of RCS piping and/or other components and possibly reduce inspection requirements.

### BRIEF DESCRIPTION OF THE INVENTION

In an exemplary embodiment of the invention, a tool for inspecting and/or treating welds, pipes, vessels and/or other components used in reactor coolant systems or other process applications comprises a first unit for axially walking inside a pipe and/or vessel, the first unit having a first plurality of legs radially extendable from the first unit, a second unit for axially walking inside the pipe and/or vessel, the second unit having a second plurality of legs radially extendable from the second unit, a coupler extending between the first unit and the second unit, the coupler being axially movable into and out of the second unit, and an end effector unit connected to the first unit, the end effector unit being capable of delivering an end effector to a pre-selected weld, pipe or vessel location and/or other component and manipulating the end effector to inspect and/or treat the weld, pipe or vessel location and/or other component.

In another exemplary embodiment of the invention, a tool for brushing welds, pipes, vessels and/or other components used in reactor coolant systems or other process applications to mitigate stress corrosion cracking in such welds, pipes, vessels and/or other components comprises a front unit for axially walking inside a pipe, the front unit having a first plurality of legs radially extendable from the front unit, a rear unit for axially walking inside the pipe, the rear unit having a second plurality of legs radially extendable from the rear unit, a coupler extending between and joining the front unit and the rear unit, the coupler being axially movable into and out of the rear unit, so as to move the front and rear units away and towards one another, respectively, and a brush unit connected to the front unit, the brush unit being capable of radially advancing a brush until the brush touches the inside circumference of the weld, rotating the brush circularly around the inside circumference of the weld, and indexing the brush axially along the pipe, to thereby mitigate any stress corrosion cracking that may be in the weld, the front unit including a plurality of first actuators for radially moving the first plurality of legs into and out of the front unit, the rear unit including a plurality of second actuators for radially moving the second plurality of legs into and out of the rear unit, the rear unit being an actuator and the coupler being movably disposed within the actuator, and the brush unit including a brush head on which is rotatably mounted the brush for brushing a pre-selected weld, pipe or vessel location and/or other component, the brush head being connected to a reversible screw drive for radially moving the brush head towards and away from the weld, pipe or vessel location and/or other component, and including a linear actuator for indexing the brush axially along the weld, pipe or vessel location and/or other component, to thereby mitigate stress corrosion cracking in, or that might otherwise occur in, the weld, pipe or vessel location and/or other component.

In a further exemplary embodiment of the invention, a method of inspecting and/or treating welds, pipes, vessels and/or other components used in reactor coolant systems or other process applications comprises the steps of providing a tool comprising a front unit for axially walking inside a pipe, the front unit having a first plurality of legs radially extendable from and radially retractable into the front unit, a rear unit for axially walking inside the pipe, the rear unit having a second plurality of legs radially extendable from and radially retractable into the rear unit, a coupler extending between the front unit and the rear unit, the coupler being axially movable into and out of the rear unit, so as to move the front and rear units away from and towards one another, respectively, and an end effector unit rotatably connected to the front unit and including an end effector for inspecting and/or treating a pre-selected weld, pipe or vessel location and/or other component, placing the tool at the entrance to a pipe or vessel containing a pre-selected weld, pipe or vessel location and/or other component, causing the tool to walk into the pipe or vessel to the pre-selected weld, pipe or vessel location and/or other component, causing the tool, upon reaching the location of the pre-selected weld, pipe or vessel location and/or other component, to anchor itself inside of the pipe or vessel, causing the end effector unit to advance the end effector until it is delivered to the pre-selected weld, pipe or vessel location and/or other component, and causing the tool to manipulate the end effector to inspect and/or treat the pre-selected weld, pipe or vessel location and/or other component, to thereby mitigate any stress corrosion cracking that may be in the weld.

### BRIEF DESCRIPTION OF THE DRAWINGS

There follows a detailed description of embodiments of the invention by way of example only with reference to the accompanying drawings, in which:
FIGURE 1 is a perspective view of the weld mitigation tool of the present invention;
FIGURE 2 is a side elevational view of the weld mitigation tool of the present invention;
FIGURE 3 is a partial cross-sectional view and partial perspective view of the weld mitigation tool of the present invention; and
FIGURE 4 is a perspective view of the weld mitigation tool of the present invention positioned in the piping leading to a nozzle of a nuclear power plant.

### DETAILED DESCRIPTION OF THE INVENTION

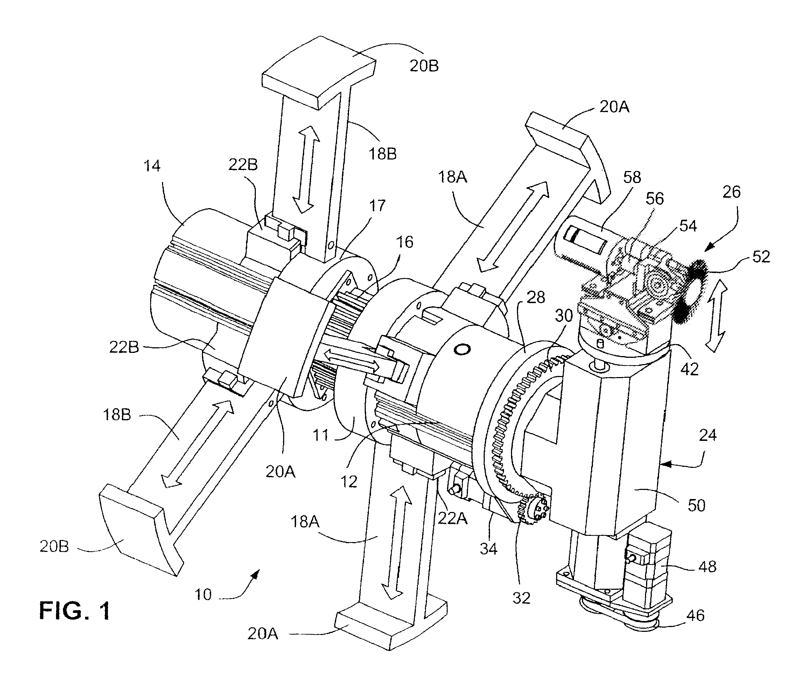

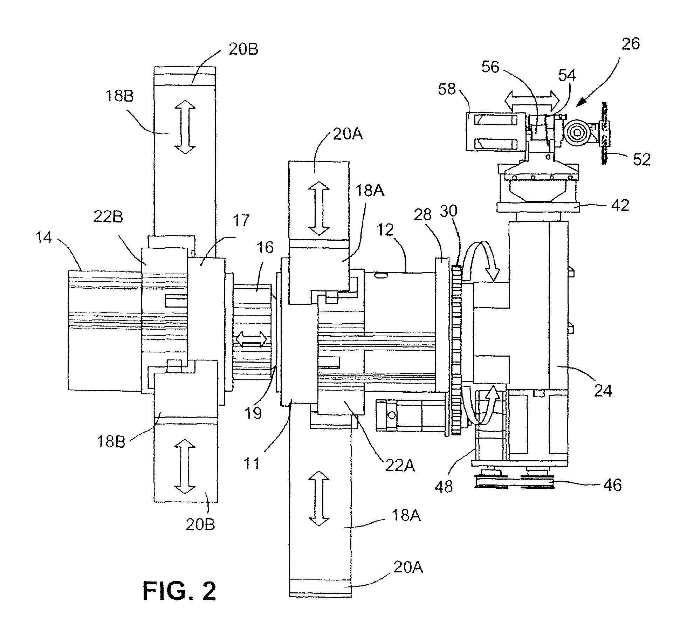

FIGURE 1 is a perspective view of the weld mitigation tool 10 of the present invention, while FIGURE 2 is a side elevational view of the weld mitigation tool 10.

Tool 10 shown in FIGURES 1 to 4 is designed to be used to mitigate stress corrosion cracking in welds in the piping of reactor coolant systems by brushing the inside diameters of pipe welds in such systems. Thus, tool 10 includes and end effector in the form of a brush for brushing pipe welds. Tool 10 is typically placed at the entrance to a pipe, whereupon tool 10 walks into the pipe to a given weld, that is often remotely located. Upon reaching the weld location, the tool anchors itself, and then advances a brush radially until it touches the inside diameter of the weld. Tool 10 then sweeps the brush circularly around the inside diameter of the weld, while gradually indexing the brush along the axis of the pipe, to thereby mitigate any stress corrosion cracking that may be in the weld.

It should be noted that the tool 10 could be used with different end effectors to perform other functions. The tool 10 could also be used to deliver an Electro-Discharge Machining (EDM) electrode to excavate existing SCC cracks or other type of defects, including pre-existing weld defects. The tool could also be used perform inspections of, for example, areas mitigated, using visual, ultrasonic. and/or eddy-current examinations. The tool can be applied to PWR and BWR to provide access for, besides mitigation (brushing) and inspection activities, surface preparation and defect removal. The tool can be used in vessels and pipes used for other process applications, such as chemical processing vessels.

Referring to the embodiment of tool 10 shown in FIGURES 1 to 4, to be able to walk to a weld area in a pipe, tool 10 includes a front axial walk unit 12 and a rear axial walk unit 14 that are joined together by a coupler 16 that extends between rear unit 14 and front unit 12. The distal end 19 of coupler 16 is bolted to front axial walk unit 12, while the proximal end of coupler 16 is movably disposed within rear unit 14. Coupler 16 is capable of being extended from and retracted into unit 14 for the purpose of moving front unit 12 and rear unit 14 with respect to one another. For this purpose, rear unit 14 necessarily contains within it a suitable pneumatic-mechanical, electromagnetic and/or electromechanical arrangement for extending coupler 16 from and retracting it into unit 14.

In one embodiment, rear axial walk unit 14 is a linear pneumatic (or hydraulic) actuator. In this embodiment, energy in the form of compressed air is converted into linear motion. The pneumatic actuator consists of a piston, a cylinder and valves (not shown). The piston is covered by a diaphram (not shown), which keeps the air in the upper portion of the cylinder, allowing air pressure to force the diaphram downard, moving the piston underneath, which in turn moves a valve stem that is linked to the internal parts of a valve. Thus, the coupler 16 is like a piston rod, attached to the piston of the actuator, so as to be axially movable into and out of a housing 15 that is part of unit 14. When the compressed air moves the piston within housing 15, the coupler 16 is caused to either extend from or retract into housing 15 so that front unit 12 and rear unit 14 are caused to move with respect to one another.

In another embodiment, rear axial walk unit 14 is a solenoid actuator with coupler 16 being the armature of the actuator so as to be axially movable into and out of the housing 15 that is part of unit 14. In this embodiment, a plurality of electromagnets are mounted within housing 15, while a plurality of corresponding magnets positioned at specified distances from each electromagnet are mounted on a portion of coupler 16. When the electromagnets in housing 15 are activated, the coupler 16, again, is caused to either extend from or retract into housing 15 so that front unit 12 and rear unit 14 are caused to move with respect to one another.

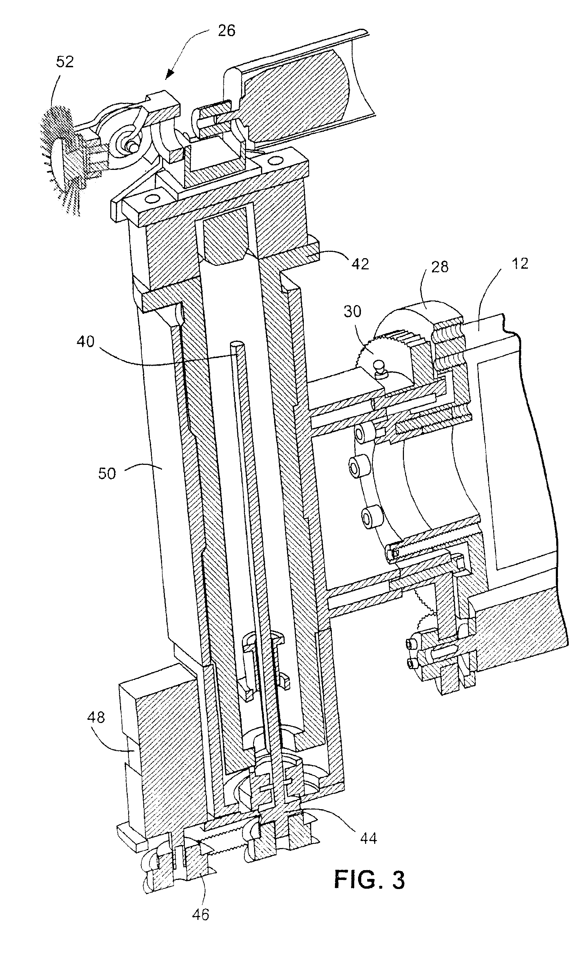

In a further embodiment, coupler 16 can be axially movably disposed within housing 15 of rear axial walk unit 14 by means of a reversible motor, gearing and screw drive arrangement like the reversible motor 48, belt drive 46 and screw drive 38 arrangement shown in FIGURE 3 and discussed in more detail below.

Front axial walk unit 12 has a plurality of legs 18A radially movable outward from or into unit 12. Preferably, unit 12 has three radially movable legs 18A. Similarly, rear axial walk unit 14 has a plurality of legs 18B radially movable outward from or into unit 14. Here again, preferably unit 14 has three radially movable legs 18B.

To radially move legs 18A and 18B, front unit 12 and rear unit 14 necessarily include suitable pneumatic-mechanical, electromagnetic and/or electromechanical arrangements for extending legs 18A and 18B from and retracting them into units 12 and 14.

In one embodiment, each of front unit legs 18A is, in effect, a rod attached to a piston in a pneumatic (or hydraulic) linear actuator, which, when it moves, causes a corresponding leg 18A to extend out of or retract into front unit 12. Similarly, each of rear unit legs 18B is, in effect, a rod attached to a piston within a pneumatic linear actuator 22B which serves to extend and retract a corresponding leg 18B into and out of rear unit 14.

In another embodiment, each of front unit legs 18A is, in effect, an armature of a solenoid actuator 22A which serves to extend and retract a corresponding leg 18A into and out of front unit 12. Similarly, each of rear unit legs 18B is, in effect, an armature of a solenoid actuator 22B which serves to extend and retract a corresponding leg 18B into and out of rear unit 14.

In a further embodiment, legs 18A and 18B can be radially extended from and retracted into units 12 and 14 by means of a reversible motor, gearing and screw drive arrangement like the reversible motor 48, belt drive 46 and screw drive 38 arrangement shown in FIGURE 3.

Each of front unit legs 18A includes a foot 20A attached to the distal end of the leg. Similarly, each of rear unit legs 18B has a foot 20B attached to the distal end of the leg 18B. Preferably, each of foot 20A and 20B is curved so as to easily mesh with the curvature inside a pipe in which tool 10 will walk.

The manner in which tool 10 walks to a weld location is as follows. If tool 10 is placed in the inside of a pipe in a state in which the armature coupler 16 is extending from rear unit 14, the front unit 12 will cause each of the solenoid actuators 22A to extend its corresponding leg 18A until each leg engages the inside circumference of the pipe. At this point, each of the feet 20A of the legs 18A will be engaging the inside circumference of the pipe so as to lock the front unit 12 into position. Once front unit 12 is locked in position, rear unit 14 will cause each of the actuators 22B on rear unit 14 to be activated so as to draw the radially extending legs 20B of rear unit 14 into the housing 15 of rear unit 14. Rear unit 14 will then cause armature coupler 16 to be retracted into the housing 15 of unit 14 so as to draw the rear unit 14 toward the front unit 12.

Once armature coupler 16 is completely contracted into housing 15 of rear unit 14, rear unit 14 will be caused to move up against front unit 12. At this point, rear unit 14 causes each of the actuators 22B to cause their corresponding leg 18B to extend radially outward from housing 15 of unit 14, until the corresponding feet 20B of each of legs 18B engages the inside circumference of the pipe in which tool 10 has been placed. The radially extension of legs 18B, so as to engage the feet 20B with the inside circumference of the pipe, causes the rear unit 14 to be locked in place. At this point in time, rear unit 14 causes the coupler 16 to extend from housing 15 while front unit 12 causes each of actuators 22 to retract their corresponding legs 20A into the housing 13 of front unit 12. The retraction of each of radially extending legs 20A unlocks front unit 12 from its position, and thereby allows front unit 12 to extend forward in a distance corresponding to the distance that coupler 16 extends outwardly from rear unit 14. At the end of the stroke of coupler 16, front unit 12 again causes each of the actuators 22A to extend the corresponding leg 18A out of housing 13 of front unit 12 until each of the corresponding feet 20A of the legs 18A engage the inside circumference of the pipe to again lock front unit 12 in position. Here again, once front unit 12 is locked in position, rear unit 14 causes each of actuators 22B to retract corresponding legs 18B into the housing 15 of rear unit 14 so as to unlock rear unit 14. Thereafter, rear unit 14 is activated so as to cause coupler 16 to retract into housing 15 of rear unit 14, thereby causing rear unit 14 to move forward in the direction of locked front unit 12. This motion is repeated time and again until the tool 10 reaches the point in the pipe where the weld to be brushed is located.

Front unit 12 includes a support collar 11 to which coupler 16 is bolted. Support collar 11 also serves as a structure for the mounting of housing 13 of front unit 12 and each of actuators 22A, also mounted on housing 13. Similarly, rear unit 14 includes a support collar 17 with a support ring 19 from which coupler 16 protrudes. Mounted on support collar 17 of rear unit 14 is housing 15 of unit 14 and each of the actuators 22, also mounted on housing 15.

Connected to the front of front unit 12 is an end effector unit, which in the embodiment of the invention shown in FIGURES 1 to 4 is a brush platform unit 24 on which is mounted a brush head 26 and a plurality of motors and gears used to move brush head 26 into position for purposes of brushing the inside diameter of a pipe weld. It should be noted that for other embodiments of the invention performing other tool functions, brush platform unit 24 would be replaced by a different end effector unit capable of delivering a different tool to a given location to perform a desired function.

Turning again to the embodiment of the invention shown in FIGURES 1 to 4, brush platform 24 is attached to front unit 12 through a turn table 28 bolted to front unit 12. Rotatably mounted by means of bearings on turn table 28 is an output gear 30, which is driven by a drive gear 32 that is also rotatably mounted by bearings on turn table 28 and driven by a drive gear motor 34 mounted on housing 13 of front unit 12. The combination of turn table 28, output gear 30, drive gear 32 and motor 34 constitutes a reversing rotary drive 36 to have reversible rotary motion, as shown in Figure 2.

Radial motion of the brush head 26 towards the inside circumference of a pipe is accomplished preferably by means of a screw drive 38 shown in Figure 3, although it should be noted that an alternative arrangement like a linear actuator could be used. A first end 40 of the screw drive is attached to a platform 42 on which the brush head 26 is mounted. The opposite end of the screw drive 44 is attached to a belt drive 46, which is driven by a reversible motor 48. As the reversible motor 48 is rotated in one direction, the belt drive 46 causes the screw drive 38 to rotate in a first direction so that it moves up within a housing 50 to thereby raise platform 42 on which brush head 26 is mounted, and thereby radially extend out of housing 50 toward the inside circumference of a pipe. Conversely, when motor 48 is rotated in the opposite direction, belt drive 46 causes screw drive 38 to turn in the opposite direction so as to contract into housing 50, thereby causing platform 42 on which brush head 26 is mounted to radially contract away from the inside circumference of the pipe.

The brush head 26 includes a nylon brush 52 embedded with grit that engages and brushes a pipe weld for purposes of mitigating stress corrosion cracking. Brush 52 is driven by a reversible motor 54 that is attached to the armature 56 of a linear actuator 58 which provides brush head 26 with the axial indexing that is used to index the brush 52 along the axis of a pipe as it brushes a pipe weld. Also included in brush head 26 is a gearing arrangement 60 which allows brush 52 to be tilted up or down in connection with brush 52 brushing the weld of a pipe.

It is the combination of gears, motors and drives that are part of brush head unit 24 that give brush head 26 the flexibility, upon tool 10 reaching a weld location, to advance the brush 52 radially outward until it touches the inside diameter of the weld and to sweep the brush circularly around the inside diameter of the weld while gradually indexing the brush along the axis of the pipe, to thereby mitigate stress corrosion cracking that may be in the weld.

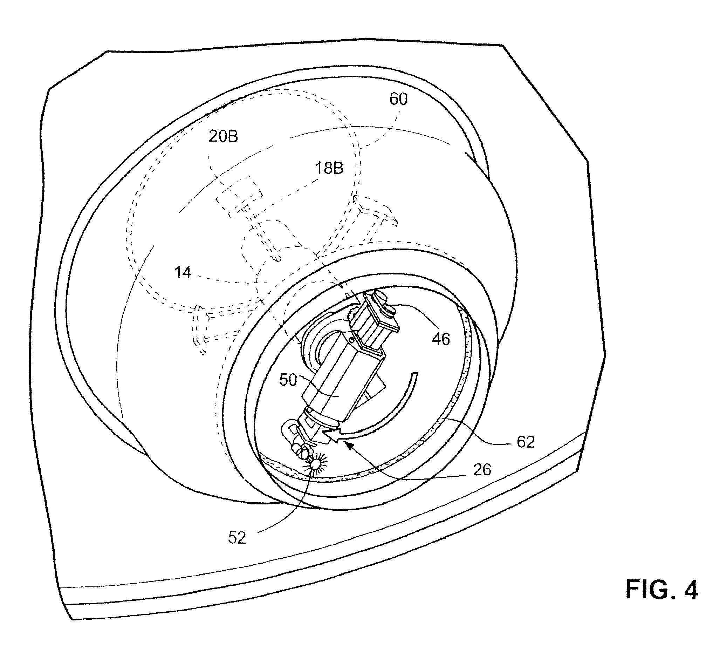

FIGURE 4 shows an example of where tool 10 has been placed into a pipe 60, and walked inside the pipe to a remotely located weld 62 for the purpose of brushing weld 62. Upon reaching weld 62, tool 10 anchors itself inside of pipe 60 by radially extending legs 18A and 18B until they engage the inside circumference of pipe 60. Tool 10 then advances brush 52 radially outward until it touches the inside diameter of weld 62. As shown in FIGURE 4, Tool 10 then sweeps brush 52 circularly around the inside diameter of weld 62, while gradually indexing brush 52 along the axis of the pipe using solenoid actuator 58 to move brush 52 axially, and thereby mitigate any stress corrosion cracking that may be in the weld 62.

Movement and on-sight operation of the tool can be controlled by a wireless control of the kind well known that typically include transceivers, both in the tool 10 and in a control unit held by an operator outside of a pipe. The tool is controlled with cables which carry electrical, pneumatic, hydraulic power, and control signals. The location of the tool/brush is monitored by a video camera mounted on the tool (not shown).

While the invention has been described in connection with what is presently considered to be the most practical and preferred embodiments, it is to be understood that the invention is not to be limited to the disclosed embodiments, but on the contrary, is intended to cover various modifications and equivalent arrangements included within the spirit and scope of the appended claims.

For completeness, various aspects of the invention are now set out in the following numbered clauses:
1. A tool for inspecting and/or treating welds, pipes, vessels and/or other components used in reactor coolant systems or other process applications, the tool comprising:
   a first unit for axially walking inside a pipe and/or vessel, the first unit having a first plurality of legs radially extendable from the first unit,
   a second unit for axially walking inside the pipe and/or vessel, the second unit having a second plurality of legs radially extendable from the second unit,
   a coupler extending between the first unit and the second unit, the coupler being axially movable into and out of the second unit, and
   an end effector unit connected to the first unit, the end effector unit being capable of delivering an end effector to a pre-selected weld, pipe or vessel location and/or other component and manipulating the end effector to inspect and/or treat the weld, pipe or vessel location and/or other component.
2. The tool recited in clause 1, wherein each of the first and second plurality of legs has a foot attached to a distal end of the leg, the foot being curved to substantially conform to the inside circumference of the pipe.
3. The tool recited in clause 1, wherein the end effector is a tool for performing a function selected from the group consisting of brushing the pre-selected weld, piping location and/or other component to mitigate stress corrosion cracking, inspecting the pre-selected weld, piping location and/or other component, preparing the surface of the pre-selected weld, piping location and/or other component, and removing defects in the pre-selected weld, piping location and/or other component.
4. The tool recited in clause 1, wherein the first unit includes a plurality of first actuators for radially moving the first plurality of legs into and out of the first unit, and wherein the second unit includes a plurality of second actuators for radially moving the second plurality of legs into and out of the second unit.
5. The tool recited in clause 1, wherein the end effector unit is attached to the front unit through a turn table bolted to the front unit and an output gear rotatably mounted on the turn table, the end effector unit including a housing bolted to the output gear.
6. The tool recited in clause 5, wherein the end effector unit is reversibly rotated by a drive gear that is meshed with the output gear and that is driven by a first reversible motor linked to the drive gear.
7. The tool recited in clause 1, wherein the end effector unit is a brush unit that includes a brush head including a brush for brushing the inside diameter of a pipe weld, and wherein the brush unit is capable of radially advancing the brush until the brush touches the inside circumference of the weld, rotating the brush circularly around the inside circumference of the weld, and indexing the brush axially along the pipe, to thereby mitigate any stress corrosion cracking that may be or might otherwise occur in the weld.
8. The tool recited in clause 7, and wherein the brush head is connected to a reversible screw drive for radially moving the brush head towards and away from the inside circumference of the weld.
9. The tool recited in clause 8, wherein the brush unit further comprises a second reversible motor and a belt drive attached between the second reversible motor and the screw drive, the second reversible motor and the belt drive controlling the radial movement of the screw drive.
10. The tool recited in clause 7, wherein the brush head includes a third reversible motor for reversibly rotating the middle brush, a fourth linear actuator for indexing the brush axially along the pipe, and a gearing arrangement for tilting the brush up or down.
11. The tool recited in clause 1, wherein the second unit is a solenoid actuator and the coupler is the armature of the second unit actuator so as to be axially movably disposed within a housing that is part of the second unit.
12. The tool recited in clause 1, wherein the second unit is a pneumatic linear actuator and the coupler is a rod attached to a piston movably disposed within the second unit.
13. The tool recited in clause 1, wherein the coupler is caused to either extend from or retract into the housing by means of a reversible motor, gearing and screw drive arrangement located within the housing and attached to the coupler.
14. The tool recited in clause 4, wherein each of the first and second actuators are solenoid actuators and each of the first and second pluralities of legs are armatures of a corresponding solenoid actuator.
15. The tool recited in clause 4, wherein each of the first and second actuators are pneumatic linear actuators and each of the first and second pluralities of legs are a rod connected to a piston movably disposed within a corresponding pneumatic linear actuator.
16. The tool recited in clause 4, wherein each of the first plurality of legs is caused to either extend from or retract into the first unit by means of a first reversible motor, gearing and screw drive arrangement located within a corresponding housing mounted on the first unit and attached to the first leg.
17. The tool recited in clause 16, wherein each of the second plurality of legs is caused to either extend from or retract into the second unit by means of a second reversible motor, gearing and screw drive arrangement located within a corresponding housing mounted on the second unit and attached to the second leg.
18. A tool for brushing welds, pipes, vessels and/or other components used in reactor coolant systems or other process applications to mitigate stress corrosion cracking in such welds, pipes, vessels and/or other components, the tool comprising:
   a front unit for axially walking inside a pipe, the front unit having a first plurality of legs radially extendable from the front unit,
   a rear unit for axially walking inside the pipe, the rear unit having a second plurality of legs radially extendable from the rear unit,
   a coupler extending between and joining the front unit and the rear unit, the coupler being axially movable into and out of the rear unit, so as to move the front and rear units away and towards one another, respectively, and
   a brush unit connected to the front unit, the brush unit being capable of radially advancing a brush until the brush touches the inside circumference of the weld, rotating the brush circularly around the inside circumference of the weld, and indexing the brush axially along the pipe, to thereby mitigate any stress corrosion cracking that may be in the weld,
   the front unit including a plurality of first actuators for radially moving the first plurality of legs into and out of the front unit,
   the rear unit including a plurality of second actuators for radially moving the second plurality of legs into and out of the rear unit, the rear unit being an actuator and the coupler being movably disposed within the actuator, and
   the brush unit including a brush head on which is rotatably mounted the brush for brushing a pre-selected weld, pipe or vessel location and/or other component, the brush head being connected to a reversible screw drive for radially moving the brush head towards and away from the weld, pipe or vessel location and/or other component, and including a linear actuator for indexing the brush axially along the weld, pipe or vessel location and/or other component, to thereby mitigate stress corrosion cracking in, or that might otherwise occur in, the weld, pipe or vessel location and/or other component.
19. A method of inspecting and/or treating welds, pipes, vessels and/or other components used in reactor coolant systems or other process applications, the method comprising the steps of:
   providing a tool comprising:
      a front unit for axially walking inside a pipe, the front unit having a first plurality of legs radially extendable from and radially retractable into the front unit,
      a rear unit for axially walking inside the pipe, the rear unit having a second plurality of legs radially extendable from and radially retractable into the rear unit,
      a coupler extending between the front unit and the rear unit, the coupler being axially movable into and out of the rear unit, so as to move the front and rear units away from and towards one another, respectively, and
      an end effector unit rotatably connected to the front unit and including an end effector for inspecting and/or treating a pre-selected weld, pipe or vessel location and/or other component, ,
      placing the tool at the entrance to a pipe or vessel containing a pre-selected weld, pipe or vessel location and/or other component,
      causing the tool to walk into the pipe or vessel to the pre-selected weld, pipe or vessel location and/or other component,
      causing the tool, upon reaching the location of the pre-selected weld, pipe or vessel location and/or other component, to anchor itself inside of the pipe or vessel,
      causing the end effector unit to advance the end effector until it is delivered to the pre-selected weld, pipe or vessel location and/or other component, and
      causing the tool to manipulate the end effector to inspect and/or treat the pre-selected weld, pipe or vessel location and/or other component, to thereby mitigate any stress corrosion cracking that may be in the weld.
20. The method of clause 19, wherein the step of causing the tool to walk into the pipe or vessel to the location of the pre-selected weld, pipe or vessel location and/or other component comprises the further steps of:
   causing the front unit, where the tool is placed inside the pipe with the coupler being extended from the second unit, to extend each of the first plurality of legs radially outward until each first leg engages the inside circumference of the pipe or vessel, so as to lock the front unit into position inside of the pipe or vessel,
   causing the rear unit, once the front unit is locked into position, to radially retract each of the second plurality of legs into the rear unit,
   causing the rear unit, once the second plurality of legs have been retracted into the rear unit, to retract the coupler into the rear unit, so as to draw the rear unit towards the front unit,
   causing the rear unit, once the rear unit has been drawn towards the front unit, to extend each of the second plurality of legs radially outward until each second leg engages the inside circumference of the pipe or vessel, so as to lock the rear unit into position inside of the pipe or vessel,
   causing the front unit, once the rear unit is locked into position, to radially retract each of the first plurality of legs into the front unit,
   causing the rear unit, once the second plurality of legs have been retracted into the rear unit, to extend the coupler out of the rear unit, so as to move the front unit away from the rear unit,
   causing the front unit, once the front unit has been moved away from the rear unit, to extend each of the first plurality of legs radially outward until each first leg engages the inside circumference of the pipe or vessel, so as to lock the front unit into position inside of the pipe or vessel,
   repeating the immediately preceding six steps until the tool reaches the point in the pipe or vessel where the pre-selected weld, pipe or vessel location and/or other component to be inspected and/or treated is located, and
   causing the tool, once it reaches the point in the pipe or vessel where the pre-selected weld, pipe or vessel location and/or other component to be inspected and/or treated is located, to anchor itself inside of the pipe or vessel by radially extending the first and second pluralities of legs until they engage the inside circumference of pipe or vessel, whereupon the tool delivers the end effector to the pre-selected weld, pipe or vessel location and/or other component and manipulates the end effector to inspect and/or treat the weld, pipe or vessel location and/or other component.

## Claims

1. A tool (10) for inspecting and/or treating welds, pipes, vessels and/or other components used in reactor coolant systems or other process applications, the tool comprising:
a first unit (12) for axially walking inside a pipe (60) and/or vessel, the first unit (12) having a first plurality of legs (18A) radially extendable from the first unit (12),
a second unit (14) for axially walking inside the pipe (60) and/or vessel, the second unit having a second plurality of legs (18B) radially extendable from the second unit (14),
a coupler (16) extending between the first unit (12) and the second unit (14), the coupler (16) being axially movable into and out of the second unit (14), and
an end effector unit (24) connected to the first unit (12), the end effector unit (24) being capable of delivering an end effector (26) to a pre-selected weld (62), pipe (60) or vessel location and/or other component and manipulating the end effector (26) to inspect and/or treat the weld (62), pipe (60) or vessel location and/or other component.

2. The tool (10) recited in claim 1, wherein each of the first and second plurality of legs (18A, 18B) has a foot (20A, 20B) attached to a distal end of the leg (18A, 18B), the foot (20A, 20B) being curved to substantially conform to the inside circumference of the pipe (60).

3. The tool (10) recited in claim 1 or 2, wherein the end effector (26) is a tool for performing a function selected from the group consisting of brushing the pre-selected weld (62), piping location and/or other component to mitigate stress corrosion cracking, inspecting the pre-selected weld (62), piping location and/or other component, preparing the surface of the pre-selected weld (62), piping location and/or other component, and removing defects in the pre-selected weld (62), piping location and/or other component.

4. The tool (10) recited in any of the preceding claims, wherein the first unit (12) includes a plurality of first actuators (22A) for radially moving the first plurality of legs (18A) into and out of the first unit (12), and wherein the second unit (14) includes a plurality of second actuators (22B) for radially moving the second plurality of legs (18B) into and out of the second unit (14).

5. The tool (10) recited in any of the preceding claims, wherein the end effector unit (24) is attached to the front unit (12) through a turn table (28) bolted to the front unit (12) and an output gear (30) rotatably mounted on the turn table (28), the end effector unit (34) including a housing (50) bolted to the output gear (30).

6. The tool (10) recited in claim 5, wherein the end effector unit (24) is reversibly rotated by a drive gear (32) that is meshed with the output gear (30) and that is driven by a first reversible motor (34) linked to the drive gear (32).

7. The tool (10) recited in any of the preceding claims, wherein the end effector unit (24) is a brush unit (26) that includes a brush head (26) including a brush (52) for brushing the inside diameter of a pipe weld (62), and wherein the brush unit (26) is capable of radially advancing the brush (52) until the brush (52) touches the inside circumference of the weld (62), rotating the brush (52) circularly around the inside circumference of the weld (62), and indexing the brush (52) axially along the pipe (60), to thereby mitigate any stress corrosion cracking that may be or might otherwise occur in the weld (62).

8. The tool (10) recited in any of the preceding claims, wherein the second unit (14) is a solenoid actuator and the coupler (16) is the armature of the second unit actuator so as to be axially movably disposed within a housing (15) that is part of the second unit (14).

9. The tool (10) recited in any of the preceding claims, wherein the second unit (14) is a pneumatic linear actuator and the coupler (16) is a rod attached to a piston movably disposed within the second unit (16).

10. The tool (10) recited in any of the preceding claims, wherein the coupler (16) is caused to either extend from or retract into the housing (15) by means of a reversible motor, gearing and screw drive arrangement located within the housing (15) and attached to the coupler (16).

11. The tool recited in claim 4, wherein each of the first and second actuators are solenoid actuators and each of the first and second pluralities of legs are armatures of a corresponding solenoid actuator.

12. The tool recited in claim 4, wherein each of the first and second actuators are pneumatic linear actuators and each of the first and second pluralities of legs are a rod connected to a piston movably disposed within a corresponding pneumatic linear actuator.

13. A tool for brushing welds, pipes, vessels and/or other components used in reactor coolant systems or other process applications to mitigate stress corrosion cracking in such welds, pipes, vessels and/or other components, the tool comprising:
a front unit for axially walking inside a pipe, the front unit having a first plurality of legs radially extendable from the front unit,
a rear unit for axially walking inside the pipe, the rear unit having a second plurality of legs radially extendable from the rear unit,
a coupler extending between and joining the front unit and the rear unit, the coupler being axially movable into and out of the rear unit, so as to move the front and rear units away and towards one another, respectively, and
a brush unit connected to the front unit, the brush unit being capable of radially advancing a brush until the brush touches the inside circumference of the weld, rotating the brush circularly around the inside circumference of the weld, and indexing the brush axially along the pipe, to thereby mitigate any stress corrosion cracking that may be in the weld,
the front unit including a plurality of first actuators for radially moving the first plurality of legs into and out of the front unit,
the rear unit including a plurality of second actuators for radially moving the second plurality of legs into and out of the rear unit, the rear unit being an actuator and the coupler being movably disposed within the actuator, and
the brush unit including a brush head on which is rotatably mounted the brush for brushing a pre-selected weld, pipe or vessel location and/or other component, the brush head being connected to a reversible screw drive for radially moving the brush head towards and away from the weld, pipe or vessel location and/or other component, and including a linear actuator for indexing the brush axially along the weld, pipe or vessel location and/or other component, to thereby mitigate stress corrosion cracking in, or that might otherwise occur in, the weld, pipe or vessel location and/or other component.

14. A method of inspecting and/or treating welds, pipes, vessels and/or other components used in reactor coolant systems or other process applications, the method comprising the steps of:
providing a tool comprising:
a front unit for axially walking inside a pipe, the front unit having a first plurality of legs radially extendable from and radially retractable into the front unit,
a rear unit for axially walking inside the pipe, the rear unit having a second plurality of legs radially extendable from and radially retractable into the rear unit,
a coupler extending between the front unit and the rear unit, the coupler being axially movable into and out of the rear unit, so as to move the front and rear units away from and towards one another, respectively, and
an end effector unit rotatably connected to the front unit and including an end effector for inspecting and/or treating a pre-selected weld, pipe or vessel location and/or other component, ,
placing the tool at the entrance to a pipe or vessel containing a pre-selected weld, pipe or vessel location and/or other component,
causing the tool to walk into the pipe or vessel to the pre-selected weld, pipe or vessel location and/or other component,
causing the tool, upon reaching the location of the pre-selected weld, pipe or vessel location and/or other component, to anchor itself inside of the pipe or vessel,
causing the end effector unit to advance the end effector until it is delivered to the pre-selected weld, pipe or vessel location and/or other component, and
causing the tool to manipulate the end effector to inspect and/or treat the pre-selected weld, pipe or vessel location and/or other component, to thereby mitigate any stress corrosion cracking that may be in the weld.

15. The method of clause 19, wherein the step of causing the tool to walk into the pipe or vessel to the location of the pre-selected weld, pipe or vessel location and/or other component comprises the further steps of:
causing the front unit, where the tool is placed inside the pipe with the coupler being extended from the second unit, to extend each of the first plurality of legs radially outward until each first leg engages the inside circumference of the pipe or vessel, so as to lock the front unit into position inside of the pipe or vessel,
causing the rear unit, once the front unit is locked into position, to radially retract each of the second plurality of legs into the rear unit,
causing the rear unit, once the second plurality of legs have been retracted into the rear unit, to retract the coupler into the rear unit, so as to draw the rear unit towards the front unit,
causing the rear unit, once the rear unit has been drawn towards the front unit, to extend each of the second plurality of legs radially outward until each second leg engages the inside circumference of the pipe or vessel, so as to lock the rear unit into position inside of the pipe or vessel,
causing the front unit, once the rear unit is locked into position, to radially retract each of the first plurality of legs into the front unit,
causing the rear unit, once the second plurality of legs have been retracted into the rear unit, to extend the coupler out of the rear unit, so as to move the front unit away from the rear unit,
causing the front unit, once the front unit has been moved away from the rear unit, to extend each of the first plurality of legs radially outward until each first leg engages the inside circumference of the pipe or vessel, so as to lock the front unit into position inside of the pipe or vessel,
repeating the immediately preceding six steps until the tool reaches the point in the pipe or vessel where the pre-selected weld, pipe or vessel location and/or other component to be inspected and/or treated is located, and
causing the tool, once it reaches the point in the pipe or vessel where the pre-selected weld, pipe or vessel location and/or other component to be inspected and/or treated is located, to anchor itself inside of the pipe or vessel by radially extending the first and second pluralities of legs until they engage the inside circumference of pipe or vessel, whereupon the tool delivers the end effector to the pre-selected weld, pipe or vessel location and/or other component and manipulates the end effector to inspect and/or treat the weld, pipe or vessel location and/or other component.
